(19) Europäisches Patentamt
European Patent Office
Office européen des brevets

(11) **EP 1 988 656 B1**

(12) **FASCICULE DE BREVET EUROPEEN**

(45) Date de publication et mention
de la délivrance du brevet:
**31.08.2011 Bulletin 2011/35**

(51) Int Cl.:
*H04L 25/06* *(2006.01)*  *H04L 27/26* *(2006.01)*

(21) Numéro de dépôt: **08103641.0**

(22) Date de dépôt: **21.04.2008**

(54) **Décodage de symboles d'un signal répartis suivant des dimensions fréquentielle et temporelle**

Dekodierung von Signalsymbolen, die nach Frequenz- und Zeitdimensionen aufgeschlüsselt sind

Decoding of symbols in a signal distributed according to frequential and temporal dimensions

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **04.05.2007 FR 0754895**

(43) Date de publication de la demande:
**05.11.2008 Bulletin 2008/45**

(73) Titulaire: **EADS Secure Networks**
**78990 Elancourt (FR)**

(72) Inventeurs:
• **Mege, Philippe**
**92340, BOURG LA REINE (FR)**
• **Martinod, Laurent**
**78150, LE CHESNAY (FR)**

(74) Mandataire: **Lapoux, Roland et al**
**Bloch & Bonnétat**
**23bis, rue de Turin**
**75008 Paris (FR)**

(56) Documents cités:
**EP-A- 1 054 541**   **US-A1- 2003 072 395**
**US-A1- 2004 208 138**

## Description

La présente invention concerne un décodage de symboles d'un signal radioélectrique qui sont répartis suivant des dimensions fréquentielle et temporelle. Les symboles ont par exemple subi une modulation selon un multiplexage par répartition en fréquences orthogonales OFDM ("Orthogonal Frequency Division Multiplexing" en anglais). Plus particulièrement, l'invention a trait à un décodage de symboles dépendant de l'estimation d'une variance du bruit mélangé au signal radioélectrique.

L'invention trouve des applications notamment dans le domaine des systèmes de radiocommunications professionnelles PMR ("Professional Mobile Radio" en anglais).

Un signal radioélectrique modulé selon un multiplexage par répartition en fréquences orthogonales OFDM est réparti sur un grand nombre de sous-porteuses dans une bande de fréquence large comparativement à l'espacement entre chaque sous-porteuses. Le signal est ainsi émis par un émetteur sur différentes sous-porteuses de manière à reconstituer le signal reçu par un récepteur malgré d'éventuelles interférences destructives dues aux trajets multiples de propagation du signal.

Du bruit et des interférences subis par le signal au cours de sa propagation entre l'émetteur et le récepteur dégradent la réception du signal. Un traitement insuffisant du bruit et des interférences entraîne un taux d'erreur de décodage élevé. De manière connue, le récepteur égalise et démodule les symboles du signal reçu et détermine des vraisemblances sur les bits correspondant aux symboles démodulés afin de décoder les informations transmises en fonction des vraisemblances déterminées.

Dans l'état de la technique, lesdites vraisemblances peuvent être corrigées en fonction d'une estimation de la variance du bruit associée au signal reçu. Une puissance instantanée du bruit peut être estimée au moyen d'une différence entre le signal reçu qui est bruité et une estimation du signal supposé reçu sans bruit.

Le document EP-A-1-054541 propose un procédé pour un système OFDM, comprenant une étape de détermination de vraisemblances des symboles du signal reçu, une étape de décodage en un signal décodé, une étape d'estimation d'une puissance instantanée du bruit en fonction de la différence entre le signal reçu et un signal dérivé à partir d'une décision dure, une étape de détermination d'une variance du bruit filtrée et une étape de pondération des vraisemblances des symboles du signal reçu à décoder en fonction de la variance du bruit filtrée.

Cette puissance instantanée du bruit est représentative notamment des interférences subies par le signal reçu, ainsi que du bruit et des erreurs de traitement des symboles, et présente des amplitudes qui peuvent être très différentes selon les symboles du signal reçu. Par conséquent, cette puissance instantanée est très bruitée et ne peut pas être utilisée comme une bonne estimée de la variance de bruit.

Une solution pour remédier à cet inconvénient consiste à découper le signal reçu en trames prédéterminées d'une certaine durée, en supposant que le canal de propagation présente des variations lentes. Une puissance instantanée du bruit est calculée pour chacun des symboles reçus pendant une trame prédéterminée afin de déterminer une estimée de la variance du bruit, qui est la moyenne des puissances instantanées, pour la trame prédéterminée. Les vraisemblances des symboles sont alors corrigées en fonction de cette estimée de la variance du bruit, cette dernière ayant une valeur différente à chaque trame prédéterminée.

Une autre solution pour remédier à cet inconvénient consiste à estimer une variance locale du bruit pour un symbole donné parmi plusieurs symboles du signal reçu répartis dans un plan temps-fréquence représentant des intervalles de temps et les sous-porteuses du signal reçu. Cette variance locale du bruit estimée est une moyenne des puissances instantanées du bruit estimées pour le symbole donné et des symboles voisins du symbole donné dans le plan temps-fréquence. Une variance locale du bruit est ainsi estimée pour chaque symbole du signal reçu. Les vraisemblances des symboles sont alors corrigées en fonction de cette variance locale du bruit.

Ces solutions sont basées sur une moyenne de la puissance instantanée du bruit et sont indifférentes à la nature du bruit subi par le signal reçu.

L'invention a pour objectif d'améliorer l'estimation de la vraisemblance de symboles démodulés d'un signal reçu dans un récepteur de radiocommunication numérique afin notamment d'accroître la performance du décodage des symboles et de diminuer le taux d'erreur de décodage malgré la présence de bruit et d'interférences dans le signal reçu.

Pour atteindre cet objectif, un procédé pour décoder dans un récepteur de radiocommunication des symboles d'un signal reçu à travers un canal de propagation, les symboles étant répartis suivant des dimensions fréquentielle et temporelle, ledit procédé comprenant une détermination de vraisemblances des symboles du signal reçu, un décodage du signal reçu en un signal décodé en fonction des vraisemblances des symboles, et une estimation d'une puissance instantanée du bruit du signal reçu en fonction d'une différence entre le signal reçu et un signal reconstruit sans bruit déduit du signal décodé, est caractérisé en ce qu'il comprend les étapes itératives suivantes :

une détermination d'une distribution bornée de la puissance instantanée du bruit en fonction de l'une des dimensions fréquentielle et temporelle,
un filtrage de la distribution bornée de la puissance instantanée du bruit en une variance du bruit filtrée en fonction d'un paramètre du canal de propagation exprimé dans ladite une dimension, et

une pondération des vraisemblances des symboles du signal reçu à décoder en fonction de la variance du bruit filtrée.

Le paramètre du canal de propagation est déterminé de telle sorte que le filtrage de la distribution bornée de la puissance instantanée du bruit soit limité à des échantillons de ladite distribution correspondant à des variations d'un signal d'interférence présent dans le canal de propagation. Ce filtrage réduit l'influence du bruit qui est aléatoire, peut présenter des variations rapides et altère le décodage des symboles du signal reçu. Par exemple, la distribution bornée de la puissance instantanée du bruit est déterminée en fonction de la dimension fréquentielle, et correspond à un spectre fréquentiel d'un nombre prédéterminé de puissances instantanées du bruit respectivement associés aux symboles reçus sur une même sous-porteuse du signal pendant une trame.

La limitation de la variance du bruit aux variations du signal d'interférence rend plus fiable la connaissance sur chaque symbole à décoder. La pondération des vraisemblances des symboles du signal reçu à décoder en fonction de la variance du bruit filtrée améliore alors la fiabilité des vraisemblances et accentue la véracité des décisions sur les symboles à décoder en des bits.

Le signal décodé dans le récepteur devient moins sensible aux interférences dues à des signaux propagés dans des canaux similaires au canal de propagation du signal reçu.

Afin que le filtrage de la puissance instantanée du bruit soit limité aux variations d'un signal d'interférence, le paramètre du canal de propagation dépend de contraintes physiques liées au canal de propagation et au réseau de radiocommunication utilisé. A cet égard, on suppose que le signal d'interférence subit les mêmes contraintes physiques que le signal reçu, c'est-à-dire le signal d'interférence est propagé dans un canal de propagation ayant des propriétés similaires à celles du canal de propagation du signal reçu. Cette assertion est en particulier valide lorsque le signal d'interférence est un signal du même réseau provenant par exemple de la réutilisation du même canal de fréquence dans une autre cellule du réseau, ce qui est un cas très fréquent notamment dans les réseaux de radiocommunication cellulaires terrestres. Selon l'invention, lorsque ladite une dimension est la fréquence, le paramètre du canal de propagation peut être une fréquence maximale dépendant d'une vitesse maximale de déplacement relatif entre un émetteur et le récepteur, ou bien lorsque ladite une dimension est le temps, le paramètre du canal de propagation est un retard maximum entre les différents trajets de propagation du signal dus aux réflexions multiples du signal au cours de sa transmission sur le canal de propagation.

Toutefois, comme on le verra dans la suite de la description, les deux paramètres précédents du canal de propagation peuvent servir à un filtrage fréquentiel et un filtrage temporel de la distribution bornée de la puissance instantanée du bruit afin d'accroître avantageusement la fiabilité des vraisemblances pondérées par la variance du bruit filtrée. Ainsi selon l'invention, des première et deuxième distributions bornées de la puissance instantanée du bruit sont déterminées respectivement en fonction des dimensions fréquentielle et temporelle, c'est-à-dire en fonction de la fréquence et du temps, et les première et deuxième distributions sont successivement filtrées en une variance du bruit filtrée en fonction de paramètres du canal de propagation exprimés respectivement dans les dimensions fréquentielle et temporelle. Cette opération de filtrage étant une opération linéaire, les filtrages successifs selon les dimensions fréquentielle puis temporelle peuvent être indifféremment remplacés par des filtrages successifs selon les dimensions temporelle puis fréquentielle.

L'invention concerne également un récepteur de radiocommunications pour décoder des symboles d'un signal reçu à travers un canal de propagation, les symboles étant répartis suivant des dimensions fréquentielle et temporelle, ledit récepteur comprenant un moyen pour déterminer des vraisemblances des symboles du signal reçu, un moyen pour décoder le signal reçu en un signal décodé en fonction des vraisemblances des symboles, et un moyen pour estimer une puissance instantanée du bruit du signal reçu en fonction d'une différence entre le signal reçu et un signal reconstruit sans bruit déduit du signal décodé. Le récepteur est caractérisé en ce qu'il comprend :

- un moyen pour déterminer une distribution bornée de la puissance instantanée du bruit en fonction de l'une des dimensions fréquentielle et temporelle,
- un moyen pour filtrer la distribution bornée de la puissance instantanée du bruit en une variance du bruit filtrée en fonction d'un paramètre du canal de propagation exprimé dans ladite une dimension, et
- un moyen pour pondérer les vraisemblances des symboles du signal reçu à décoder en fonction de la variance du bruit filtrée.

Enfin, l'invention se rapporte à un programme d'ordinateur apte à être mis en oeuvre dans un récepteur pour décoder des symboles d'un signal reçu à travers un canal de propagation, les symboles étant répartis suivant des dimensions fréquentielle et temporelle, ledit programme comprenant des instructions qui, lorsque le programme est exécuté dans ledit récepteur, réalisent les étapes conforme au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un récepteur de radiocommunication selon l'invention ; et
- la figure 2 est un algorithme d'un procédé de décodage de symboles selon l'invention.

De manière générale, l'invention décrite ci-après est relative à un récepteur de radiocommunication dans un réseau de radiocommunication cellulaire numérique. Le récepteur possède une ou plusieurs antennes de réception et communique avec un émetteur à une ou plusieurs antennes d'émission. Par exemple, l'émetteur est un terminal mobile et le récepteur est une station de base, ou inversement.

Selon un premier exemple, le réseau de radiocommunication est un réseau de radiocommunication cellulaire numérique terrestre ou aéronautique ou par satellites, ou bien un réseau local sans fil de type WLAN ("Wireless Local Area Network" en anglais) ou WIMAX ("World wide Interoperability Microwave Access" en anglais), ou bien un réseau de radiocommunications professionnelles PMR ("Professional Mobile Radio" en anglais).

Selon un deuxième exemple, le réseau de radiocommunication est un réseau local sans fil adhoc dépourvu d'infrastructure. L'émetteur et le récepteur communiquent directement entre eux de manière spontanée sans l'intermédiaire d'un équipement de centralisation de communication comme un point ou une borne d'accès ou bien une station de base.

Dans le réseau de radiocommunication, des interférences entre symboles dues aux trajets multiples de propagation dans un signal d'usager, des interférences entre sous-porteuses dues à l'étalement Doppler qui sont la conséquence du déplacement relatif entre l'émetteur et le récepteur, et des interférences d'accès multiple entre des signaux de plusieurs usagers sont engendrées par la propagation dans le canal de propagation et dégradent la qualité du signal reçu. Ces dégradations sont réduites par une estimation de la fonction de transfert du canal de propagation qui est effectuée à l'aide d'information connue par avance du récepteur, comme une séquence pilote transmise par l'émetteur et répartie sur des symboles pilotes placés dans chaque trame de signal OFDM sur certaines positions dans les deux dimensions fréquentielle et temporelle. Un bruit additif à la réception du signal détériore cette estimation de la fonction de transfert. Le signal reçu sr comprend alors un signal utile correspondant aux données émises mélangées au bruit additif et aux interférences.

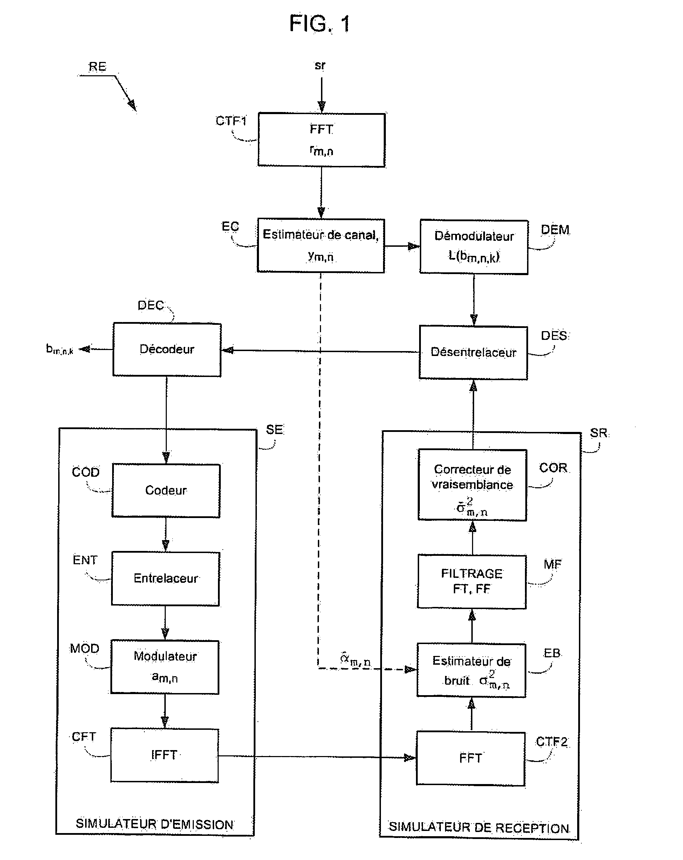

La figure 1 montre des moyens fonctionnels inclus dans un récepteur de radiocommunication RE pour la mise en oeuvre du procédé de l'invention dans un réseau de radiocommunication numérique. Le récepteur RE comprend notamment un premier convertisseur temps-fréquence CTF1, un estimateur de canal EC, un démodulateur DEM, un désentrelaceur DES, un décodeur DEC, ainsi qu'un simulateur d'émission SE et un simulateur de réception SR. Le simulateur d'émission SE inclut un codeur COD, un entrelaceur ENT, un modulateur MOD et un convertisseur fréquence-temps CFT.

Le simulateur de réception SR inclut un deuxième convertisseur temps-fréquence CTF2, un estimateur de bruit EB, un module de filtrage MF et un correcteur de vraisemblance COR.

Le signal sr reçu par le récepteur RE à travers le canal de propagation traverse par exemple dans le récepteur des étages d'amplification, de mise en forme en bande de base, d'échantillonnage et de suppression d'intervalle de garde avant d'être soumis à une transformation de Fourier rapide FFT ("Fast Fourier Transform" en anglais) dans le premier convertisseur temps-fréquence CTF1 pour passer le signal reçu du domaine temporel au domaine fréquentiel. Chaque échantillon du domaine fréquentiel est appelé sous-porteuse. De manière générale, le premier convertisseur CTF1 applique un filtrage temporel adapté en réception au signal reçu avant que ce dernier ne subisse la transformation de Fourier rapide.

Le signal sr reçu par le récepteur est émis par l'émetteur sous la forme de trames successives comprenant des symboles répartis suivant une dimension temporelle et une dimension fréquentielle, c'est-à-dire suivant un axe de temps et suivant un axe de fréquence. Par exemple, le signal est émis sur M sous-porteuses dans une trame divisée en N intervalles de temps de symbole consécutifs dédiés chacun à la transmission de M symboles.

Le canal de propagation entre une antenne d'émission et une antenne de réception est modélisé par des coefficients complexes $\alpha_{m,n}$ de la fonction de transfert du canal de propagation associés respectivement à des sous-porteuses m, avec $0 \leq m \leq M\text{-}1$, pour un intervalle de temps donné n, avec $0 \leq n \leq N\text{-}1$.

A la sortie du premier convertisseur temps-fréquence CTF1 est fourni un signal reçu dont chaque symbole complexe $r_{m,n}$ reçu au $n^{\text{ième}}$ intervalle de temps sur la $m^{\text{ième}}$ sous-porteuse est donné par la relation suivante :

$$r_{m,n} = \alpha_{m,n} \times s_{m,n} + b_{m,n},$$

où $s_{m,n}$ et $b_{m,n}$ sont des nombres complexes représentant respectivement un symbole de signal utile et le bruit reçu sur la $m^{\text{ième}}$ sous-porteuse au $n^{\text{ième}}$ intervalle de temps. Le symbole reçu $r_{m,n}$ est un élément d'une matrice R de symboles reçus pendant une trame :

$$R = \begin{bmatrix} r_{0,0} & r_{0,1} & \cdots & r_{0,N-1} \\ r_{1,0} & r_{1,1} & \cdots & r_{1,N-1} \\ \cdots & \cdots & r_{m,n} & \cdots \\ r_{M-1,0} & r_{M-1,1} & \cdots & r_{M-1,N-1} \end{bmatrix}.$$

Le bruit reçu $b_{m,n}$ comprend des interférences intracellulaires et/ou intercellulaires ainsi que le bruit blanc gaussien additif. Le bruit reçu $b_{m,n}$ peut s'écrire comme la somme du bruit blanc gaussien additif $BB_{m,n}$ et d'un symbole $u_{m,n}$ d'un signal d'interférence multiplié par un coefficient de transfert $\beta_{m,n}$ du canal de propagation associé au signal d'interférence. Le signal d'interférence est supposé être essentiellement de même nature que le signal utile, à cause par exemple de signaux émis dans le réseau de radiocommunication cellulaire avec une bande de fréquence commune à celle du signal utile reçu, et est également émis sur M sous-porteuses dans une trame comprenant N intervalles de temps de symbole.

Le signal reçu fourni par le premier convertisseur temps-fréquence CTF1 est traité par l'estimateur de canal EC qui détermine une estimée de canal définie par des coefficients estimés $\hat{\alpha}_{m,n}$ de la fonction de transfert du canal de propagation entre l'émetteur et le récepteur RE. L'estimée de canal est par exemple déterminée en fonction de séquences de symboles pilotes contenues dans le signal reçu et connues du récepteur.

L'estimateur de canal EC égalise en outre les symboles reçus $r_{m,n}$ en des symboles égalisés $y_{m,n}$ en fonction de coefficients estimés $\hat{\alpha}_{m,n}$ de la fonction de transfert du canal de propagation. Par exemple, les symboles égalisés $y_{m,n}$ dépendent de la division des symboles reçus $r_{m,n}$ par les coefficients estimés $\hat{\alpha}_{m,n}$.

Les symboles égalisés $y_{m,n}$ sont démodulés par le démodulateur DEM en des bits démodulés, par exemple selon une démodulation d'amplitude en quadrature de phase QAM4 ("Quadrature Amplitude Modulation" en anglais), connue également sous le sigle QPSK ("Quadrature Phase-Shift Keying" en anglais), faisant correspondre par exemple un symbole complexe $+j$, $+1$, $-1$, $-j$ à un couple respectif de bits consécutifs $(0,0)$, $(0,1)$, $(1,0)$, $(1,1)$. Ces symboles égalisés $y_{m,n}$ peuvent être mémorisés par l'estimateur de canal EC ou le démodulateur DEM et fournis par ces derniers au désentrelaceur DES et/ou au décodeur DEC.

Le démodulateur DEM détermine une vraisemblance $L(b_{m,n,k})$ d'un $k^{ième}$ bit $b_{m,n,k}$ contenu dans un symbole égalisé $y_{m,n}$ comprenant K bits, avec $0 \leq k \leq K-1$. Par exemple, selon une modulation à quatre états de phase QAM4, chaque symbole correspond à $K = 2$ bits. Dans une constellation représentant différentes valeurs possibles de symboles fictifs $z$ à émettre, la vraisemblance d'un $k^{ième}$ bit d'information $b_{m,n,k}$ d'un symbole égalisé $y_{m,n}$ est la différence entre la distance minimale entre le symbole égalisé $y_{m,n}$ et un symbole fictif $z$ dont le $k^{ième}$ bit a pour valeur "1" et la distance minimale entre le symbole égalisé $y_{m,n}$ et un symbole fictif $z$ dont le $k^{ième}$ bit a pour valeur "0", selon la relation suivante :

$$L(b_{m,n,k}) = \min_{z / b_k = 1} \left\| r_{m,n} - \hat{\alpha}_{m,n} z \right\|^2 - \min_{z / b_k = 0} \left\| r_{m,n} - \hat{\alpha}_{m,n} z \right\|^2 \quad (1).$$

Pour des raisons de formalisme et d'éventuelle division par zéro interdite, un symbole égalisé $y_{m,n}$ est multiplié par le coefficient estimé $\hat{\alpha}_{m,n}$ respectif et correspond au symbole reçu $r_{m,n}$, le symbole fictif $z$ est donc également multiplié par le coefficient estimé $\hat{\alpha}_{m,n}$. Par exemple, la vraisemblance d'un bit d'un symbole reçu est déterminée par rapport aux $2^n$ symboles possibles de la constellation selon une modulation de type QAM. Par ailleurs, la vraisemblance $L(b_{m,n,k})$ est déterminée en supposant une puissance de bruit uniforme pour tous les symboles reçus.

La vraisemblance $L(b_{m,n,k})$ a une valeur "douce" ("soft value") négative ou positive (flottante), par comparaison à une valeur "dure" ("hard value") telle que la valeur binaire "1" ou "0", pour indiquer que le démodulateur DEM délivre des valeurs flottantes réelles $L(b_{m,n,k})$ ayant chacune un signe qui impose une décision ultérieure sur l'état du bit correspondant $b_{m,n,k}$, c'est-à-dire une décision sur la valeur "dure" "0" ou "1". L'amplitude $|L(b_{m,n,k})|$ représente la fiabilité de la décision ultérieure et est une valeur "souple" qui représente un indice de confiance de l'état binaire déterminé par le signe de $L(b_{m,n,k})$. Plus l'amplitude $|L(b_{m,n,k})|$ est grande, plus la confiance pour l'état binaire correspondant au signe de la vraisemblance est vraisemblable ; au mieux, l'amplitude de la vraisemblance est maximale par exemple pour chacun des quatre points de la constellation de la modulation de phase QPSK. Plus l'amplitude $|L(b_{m,n,k})|$ est petite et voisine de 0, plus l'état binaire correspondant au signe de la vraisemblance n'est pas sûr, c'est-à-dire plus le symbole complexe égalisé $y_{m,n}$ est équidistant de deux symboles fictifs de la constellation.

Le démodulateur DEM qui n'a effectué aucune décision pour déterminer des valeurs binaires "dures" "0" ou "1" fournit en série les valeurs numériques de vraisemblance L($b_{m,n,k}$) des bits démodulés au désentrelaceur DES, ces valeurs étant par exemple comprises entre -1 et +1 selon une norme prédéterminée. Le désentrelaceur DES effectue un désentrelacement des vraisemblances des bits démodulés selon un algorithme de désentrelacement de canal réciproque à un algorithme d'entrelacement de canal utilisé dans un entrelaceur de l'émetteur, afin d'inhiber l'entrelacement introduit à l'émission du signal.

Le décodeur DEC décode les bits démodulés désentrelacés fournis par le désentrelaceur DES en fonction des vraisemblances L($b_{m,n,k}$) précédemment déterminées. Le décodeur DEC effectue une décision dure et délivre des bits décodés, selon le décodage correspondant au codage utilisé à l'émission du signal, par exemple selon un décodage convolutif qui corrige les erreurs au moyen de l'algorithme de Viterbi.

Le décodeur DEC fournit en sortie des bits, sur lesquels a été effectuée une décision dure, au simulateur d'émission SE afin que ce dernier simule une chaîne d'émission d'un signal en fonction des bits correspondant aux symboles désentrelacés, par analogie avec l'émetteur.

A cette fin, les bits issus du décodeur DEC sont appliqués au codeur COD. Ces bits issus du codeur sont ensuite entrelacés par l'entrelaceur ENT puis ces bits sont fournis au modulateur MOD pour former des symboles estimés $a_{m,n}$ correspondant respectivement aux symboles reçus $r_{m,n}$ qui n'auraient subi aucune déformation de canal. En d'autres termes, chaque symbole estimé $a_{m,n}$ est une meilleure hypothèse d'un symbole émis respectif $s_{m,n}$ et correspond aux bits d'un symbole reçu respectif $r_{m,n}$ issus du décodeur DEC. Chaque symbole estimé $a_{m,n}$ est un symbole de signal reconstruit sans bruit déduit d'un symbole reçu respectif $r_{m,n}$ du signal reçu décodé.

Les symboles estimés $a_{m,n}$ sont appliqués au convertisseur fréquence-temps CFT et subissent notamment une transformation de Fourier rapide inverse IFFT ("Inverse Fast Fourier Transform" en anglais) pour passer le signal comprenant les symboles estimés $a_{m,n}$ du domaine fréquentiel au domaine temporel, et un filtrage temporel en émission. Le convertisseur fréquence-temps CFT fournit en sortie un signal estimé comprenant les symboles estimés $a_{m,n}$ au simulateur de réception SR.

Le deuxième convertisseur temps-fréquence CTF2 du simulateur de réception SR applique au signal estimé un filtrage temporel en réception adapté au filtrage temporel en émission, puis une transformation de Fourier rapide FFT pour passer le signal estimé du domaine temporel au domaine fréquentiel, d'une manière similaire au filtrage et à la transformation dans le premier convertisseur CTF1. Le deuxième convertisseur CTF2 fournit un signal estimé comprenant des symboles estimés $aa_{m,n}$ à l'estimateur de bruit EB.

En variante, selon le type de modulation utilisée, les symboles estimés $a_{m,n}$ en sortie du modulateur MOD ne sont pas appliqués au convertisseur fréquence-temps CFT et sont directement fournis à l'estimateur de bruit EB ; dans ce cas, ces symboles sont identiques à ceux fournis en sortie du deuxième convertisseur CTF2 : $aa_{m,n}$ - $a_{m,n}$.

L'estimateur de bruit EB détermine une erreur de traitement en fonction d'une différence entre le signal bruité reçu initialement et le signal estimé qui est un signal reconstruit sans bruit déduit du signal décodé. Cette erreur représente une combinaison notamment d'interférences, du bruit blanc gaussien additif et des erreurs d'estimation de canal et de décodage. Pour simuler la déformation du signal estimé fictivement transmis dans le même canal de propagation que celui du signal reçu initial, les symboles estimés $aa_{m,n}$ sont respectivement multipliés par les coefficients estimés $\hat{\alpha}_{m,n}$ de la fonction de transfert du canal de propagation fournis par l'estimateur de canal EC. Plus précisément, cette erreur $e_{m,n}$ est déterminée pour la $m^{ième}$ sous-porteuse au $n^{ième}$ intervalle de temps selon la relation suivante :

$$e_{m,n} = r_{m,n} - \hat{\alpha}_{m,n} \times aa_{m,n}.$$

L'estimateur de bruit EB déduit une estimation de la puissance instantanée du bruit $\sigma^2_{m,n}$ associée au symbole $r_{m,n}$ en fonction de la norme au carré de l'erreur de traitement $e_{m,n}$ :

$$\sigma^2_{m,n} = \left\| e_{m,n} \right\|^2 = \left\| r_{m,n} - \hat{\alpha}_{m,n} \times aa_{m,n} \right\|^2 \qquad (2).$$

Selon l'invention, l'estimateur de bruit EB fournit la puissance instantanée du bruit $\sigma^2_{m,n}$ au module de filtrage MF qui applique un filtre temporel FT et/ou un filtre fréquentiel FF à cette puissance instantanée du bruit, afin d'obtenir une variance du bruit filtrée $\breve{\sigma}^2_{m,n}$.

Cette variance du bruit filtrée $\breve{\sigma}^2_{m,n}$ est alors fournie au correcteur de vraisemblance COR, afin de pondérer les vraisemblances $L(b_{m,n,k})$ par la variance du bruit filtrée $\breve{\sigma}^2_{m,n}$ respective. L'application des filtres temporel FT et fréquentiel FF à la puissance instantanée du bruit et la correction des vraisemblances $L(b_{m,n,k})$ en fonction de la variance du bruit filtrée sont décrites en détail ci-après dans le procédé mis en oeuvre dans le récepteur RE.

Le correcteur de vraisemblance COR fournit des vraisemblances corrigées $L'(b_{m,n,k})$ au désentrelaceur DES qui désentrelace ces vraisemblances avant que les bits correspondant à ces dernières ne soient décodés par le décodeur DEC.

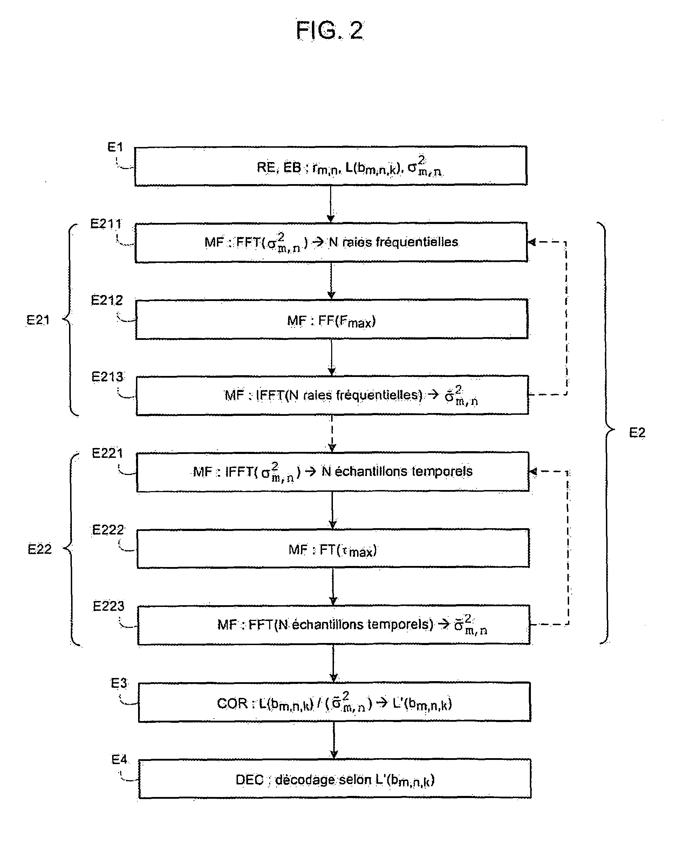

En référence à la figure 2, le procédé de décodage de symboles selon l'invention comprend des étapes E1 à E4 exécutées automatiquement dans le récepteur RE.

A l'étape E1, le récepteur RE reçoit un signal émis par un émetteur sous la forme de trames successives comprenant des symboles répartis suivant des dimensions fréquentielle et temporelle. Le signal est émis par exemple sur M sous-porteuses dans une trame divisée en N intervalles de temps de symbole, par exemple selon une modulation à multiplexage par répartition en fréquences orthogonales OFDM. Comme expliqué précédemment, le récepteur égalise des symboles du signal reçu pour chaque trame, détermine des vraisemblances $L(b_{m,n,k})$ sur les bits des symboles égalisés en supposant une puissance de bruit uniforme pour tous les symboles reçus, et décode les symboles égalisés en fonction des vraisemblances déterminées. Au moyen du simulateur d'émission SE et du simulateur de réception SR, le récepteur produit un signal estimé qui est formé en fonction des bits issus du décodage et qui est un signal reconstruit sans bruit déduit du signal reçu décodé. L'estimateur de bruit EB du récepteur RE estime alors une puissance instantanée du bruit $\sigma^2_{m,n}$ pour un symbole reçu $r_{m,n}$ sur la $m^{ième}$ sous-porteuse au $n^{ième}$ intervalle de temps en fonction de la norme au carré de la différence entre le signal bruité reçu initialement et le signal estimé selon la relation (2). L'estimateur de bruit EB fournit la puissance instantanée du bruit estimée $\sigma^2_{m,n}$ au module de filtrage MF.

La puissance instantanée de bruit estimée $\sigma^2_{m,n}$ n'est pas obtenue par une soustraction directe d'un signal de symboles égalisés au signal reçu, mais en fonction d'un signal reconstruit sans bruit déduit du signal reçu décodé afin de bénéficier d'un gain de traitement dû aux décisions lors du décodage.

A l'étape E2, le module de filtrage MF détermine au moins un filtre, à appliquer à la puissance instantanée du bruit pour les symboles reçus pendant une trame, en fonction d'au moins l'une de contraintes physiques du canal de propagation entre l'émetteur et le récepteur. Ces contraintes physiques sont par exemple relatives à la fréquence et au temps.

Le filtre est caractérisé par une fonction de filtrage qui s'adapte au signal reçu. La fonction de filtrage a des paramètres exprimés dans au moins l'une des dimensions fréquentielle et temporelle. Par exemple, un paramètre dépend d'une vitesse maximale de déplacement relatif entre un émetteur et le récepteur et peut être actualisé en fonction de la fréquence de la porteuse du signal reçu par le récepteur. Des limites sont alors attribuées au filtre en fonction de ces paramètres.

Statistiquement, en particulier lorsque des interférences provenant d'un signal émis autre que le signal utile sont présentes sur le canal, la puissance instantanée du bruit estimée $\sigma^2_{m,n}$ n'est pas uniforme selon un plan temps-fréquence représentant les M sous-porteuses et les N intervalles de temps du signal reçu pendant une trame. En effet, le bruit étant une combinaison d'interférences, du bruit blanc gaussien additif et d'erreurs d'estimation de canal et de décodage, l'amplitude de la variance du bruit varie fortement d'un symbole à un autre symbole pour tous les symboles du signal reçu.

Le filtre déterminé par le module de filtrage MF a pour fonction de garder seulement, ou de privilégier, des composantes de la puissance instantanée du bruit situées dans des zones du plan temps-fréquence dans lesquelles la variance du bruit doit avoir une amplitude en moyenne plus élevée que celle de la variance du bruit dans d'autres zones. Il existe en effet des zones dans le plan temps-fréquence où des interférences perturbent la réception du signal et augmentent la variance du bruit.

Des symboles, appartenant par exemple au même intervalle de temps ou à la même sous-porteuse que le symbole donné, sont considérés pour évaluer la variance du bruit d'un symbole donné. Par exemple pour une puissance

instantanée du bruit $\sigma^2_{m,n}$ d'un symbole reçu $r_{m,n}$, les symboles voisins considérés sont reçus également au n$^{ième}$ intervalle de temps ou sur la m$^{ième}$ sous-porteuse.

Le module de filtrage MF détermine un filtre fréquentiel FF et un filtre temporel FT respectivement à des étapes E21 et E22. Selon l'invention, il est supposé que le signal d'interférence causant des interférences intracellulaires et/ou intercellulaires au signal utile reçu subit les mêmes contraintes physiques que le signal utile reçu.

Le module de filtrage MF détermine un filtre fréquentiel FF à l'étape E21 comprenant des sous-étapes E211 à E213.

A une sous-étape E211, le module de filtrage MF sélectionne sur l'axe de temps les N symboles reçus successivement pendant N intervalles de temps de symbole d'une trame sur l'une donnée des M sous-porteuses. Par conséquent, le module de filtrage MF sélectionne également les N puissances instantanées du bruit respectivement associées aux N symboles sélectionnés.

Les N puissances instantanées du bruit $\sigma^2_{m,n}$ sélectionnées selon l'axe de temps sont soumises à une transformation de Fourier rapide FFT afin de déterminer un spectre fréquentiel de la puissance instantanée du bruit. Le module de filtrage MF détermine ainsi une distribution bornée de la puissance instantanée du bruit en fonction de la dimension fréquentielle, puisque l'ensemble des N puissances instantanées du bruit $\sigma^2_{m,n}$ sélectionnées est limité.

Les N symboles sélectionnés ont été reçus successivement et régulièrement pendant N intervalles de temps respectif. Par conséquent le signal a une fréquence d'échantillonnage Fe qui dépend de la durée d'un intervalle de temps et la fenêtre d'observation du spectre fréquentiel recouvre N échantillons fréquentiels correspondant respectivement aux N symboles sélectionnés. Le spectre de la puissance instantanée du bruit est par exemple centré sur une fréquence nulle correspondant à la fréquence Fp de la porteuse du signal et les échantillons fréquentiels sont répartis sur une bande de fréquence dont la largeur est égale à la fréquence d'échantillonnage Fe et dont les limites sont égales à - Fe/2 et + Fe/2.

Selon une modulation à multiplexage par répartition en fréquences orthogonales OFDM, la largeur de la bande de fréquence des M sous-porteuses est très inférieure à la fréquence Fp de la porteuse du signal émis qui est la moyenne des fréquences de sous-porteuses respectives. Par exemple, la fréquence de la porteuse est de 3 GHz et le pas fréquentiel entre deux sous-porteuses consécutives est de 10 kHz.

Une contrainte physique du canal de propagation relative à la fréquence est par exemple une fréquence de Doppler maximale $F_{max}$ qui dépend d'une vitesse maximale $V_{max}$ de déplacement relatif entre un émetteur et le récepteur RE et de la fréquence de la porteuse Fp, la vitesse maximale de déplacement $V_{max}$ étant par exemple égale à 200 Km/h. La fréquence de Doppler maximale $F_{max}$ vaut $F_{max} = (V_{max}/c)Fp$, où c est la vitesse de la lumière.

A une sous-étape E212, le module de filtrage MF détermine un filtre fréquentiel FF ayant des limites dépendant d'un paramètre du canal de propagation exprimé dans la dimension fréquentielle. Ce paramètre est par exemple une fréquence limite qui est la fréquence maximale de Doppler $F_{max}$.

Dans l'expression de la puissance instantanée du bruit $\sigma^2_{m,n}$ selon la relation (2), la norme au carré d'un coefficient estimé $\hat{\alpha}_{m,n}$ équivaut au produit du coefficient estimé par son conjugué. La transformée de Fourier rapide FFT appliquée à la norme au carré du coefficient estimé équivaut alors au produit de convolution de la transformée de Fourier rapide FFT du coefficient estimé par elle-même. Une propriété de ce produit de convolution est de doubler la largeur du spectre fréquentiel de la puissance instantanée du bruit.

Par conséquent, les limites du filtre fréquentiel déterminé FF dépendent du double de la fréquence maximale de Doppler $F_{max}$. Par exemple, les limites du filtre fréquentiel FF coïncident avec des fréquences - 2 $F_{max}$ et + 2 $F_{max}$ dans le spectre fréquentiel de la puissance instantanée du bruit.

En variante, la fréquence maximale de Doppler $F_{max}$, et par conséquent les limites du filtre FF, dépendent de la fréquence de la sous-porteuse donnée.

Le module de filtrage MF filtre les échantillons fréquentiels en fonction du filtre FF appliqué au spectre fréquentiel de la puissance instantanée du bruit, c'est-à-dire filtre la distribution fréquentielle de la puissance instantanée du bruit en fonction de la fréquence maximale de Doppler $F_{max}$. Par exemple, le module de filtrage MF maintient l'amplitude des raies fréquentielles comprises entre les limites du filtre FF, c'est-à-dire entre les fréquences - 2 $F_{max}$ et + 2 $F_{max}$, et annule l'amplitude de toutes les autres raies fréquentielles. Le filtre FF se comporte comme un filtre passe-bande.

En variante le filtre FF peut consister à atténuer plus fortement l'amplitude des raies fréquentielles comprises au delà des limites du filtre FF que celles comprises entre les limites de ce même filtre.

A une sous-étape E213, le module de filtrage MF applique les N raies fréquentielles à une transformation de Fourier rapide inverse IFFT afin de former N variances du bruit filtrées $\breve{\sigma}^2_{m,n}$ correspondant aux N symboles reçus successivement pendant N intervalles de temps. Ces N variances du bruit filtrées $\breve{\sigma}^2_{m,n}$ représentent des estimations locales de la variance du bruit correspondant respectivement aux N symboles. Une variance de bruit filtrée correspondant à un symbole donné parmi les N symboles sélectionnés n'est donc pas une moyenne des puissances instantanées du bruit estimées pour les N symboles sélectionnés, mais représente une estimation locale de la variance du bruit du symbole donné en fonction du filtrage des variations des puissances instantanées des N symboles sélectionnés.

Les étapes E211 à E213 sont exécutées pour chacune des M sous-porteuses du signal reçu dans le module de filtrage. A l'issue de l'étape E21, le module de filtrage MF a ainsi sélectionné M ensembles distincts de N symboles, effectué M filtrages fréquentiels et filtré les N puissances instantanées du bruit $\sigma^2_{m,n}$ pour chacune des M sous-porteuses.

Le module de filtrage MF détermine un filtre temporel FT à l'étape E22 comprenant des sous-étapes E221 à E223, similaires aux étapes E211 à E213.

A la sous-étape E221, le module de filtrage MF sélectionne sur l'axe de fréquence les M symboles reçus sur les M sous-porteuses simultanément pour l'un donné des N intervalles de temps. Par conséquent, le module de filtrage MF sélectionne également les M puissances instantanées du bruit respectivement associées aux M symboles sélectionnés.

Les M puissances instantanées du bruit $\sigma^2_{m,n}$ sélectionnées selon l'axe de fréquence sont soumises à une transformation de Fourier rapide inverse IFFT afin de déterminer un spectre temporel de la puissance instantanée du bruit. Ce spectre temporel représente les variations temporelles de la puissance instantanée du bruit. Le module de filtrage MF détermine ainsi une distribution bornée de la puissance instantanée du bruit en fonction de la dimension temporelle, puisque l'ensemble des M puissances instantanées du bruit $\sigma^2_{m,n}$ sélectionnées est limité. Les M symboles sélectionnés ont été reçus respectivement sur des sous-porteuses espacées régulièrement. Par conséquent la fenêtre d'observation du spectre temporel recouvre M échantillons temporels correspondant respectivement aux M symboles sélectionnés. Par exemple, les échantillons temporels sont répartis entre un instant t = 0 et un instant t = Te, où Te est une durée correspondant à l'inverse de la différence entre les fréquences respectives de deux sous-porteuses consécutives.

Une contrainte physique du canal de propagation relative au temps est par exemple la dispersion temporelle du canal de propagation limitée à un retard maximum $\tau_{max}$ parmi différents retards de trajet possibles du signal reçu. Ces différents retards de trajet sont statistiquement connus en fonction de la fréquence de la porteuse du signal et de l'environnement dans lequel est transmis le signal et dont dépend la dispersion temporelle du canal de propagation. Par exemple, dans un environnement urbain, la dispersion temporelle est typiquement limitée à un retard maximum $\tau_{max}$ de 5 μs, et dans un environnement accidenté de type montagneux, la dispersion temporelle est typiquement limitée à un retard maximum $\tau_{max}$ de 15 μs.

A une sous-étape E222, le module de filtrage MF détermine un filtre temporel FT ayant des limites dépendant d'un paramètre du canal de propagation exprimé dans la dimension temporelle. Ce paramètre est par exemple un temps limite qui est le retard maximum $\tau_{max}$.

Comme pour le filtre fréquentiel, l'application de la transformée de Fourier rapide inverse IFFT à la puissance instantanée du bruit $\sigma^2_{m,n}$ a pour propriété de doubler la largeur du spectre temporel de la puissance instantanée du bruit.

Par conséquent, les limites du filtre temporel déterminé FT dépendent du double du retard maximum $\tau_{max}$. Par exemple, les limites du filtre temporel FT coïncident avec des instants t = 0 et t = 2 $\tau_{max}$.

Le module de filtrage MF filtre les échantillons temporels en fonction du filtre FT appliqué au spectre temporel de la puissance instantanée du bruit, c'est-à-dire filtre la distribution temporelle de la puissance instantanée du bruit en fonction du retard maximum $\tau_{max}$. Par exemple, le module de filtrage MF maintient l'amplitude des échantillons temporels compris entre les limites du filtre FT, c'est-à-dire entre les instants t = 0 et t = 2 $\tau_{max}$, et annule l'amplitude de tous les autres échantillons temporels.

En variante le filtre FT peut consister à atténuer plus fortement l'amplitude des raies temporelles comprises au delà des limites du filtre FT que celles comprises entre les limites de ce même filtre.

A une sous-étape E223, le module de filtrage MF applique les M échantillons temporels à une transformation de Fourier rapide FFT afin de former M variances du bruit filtrées $\breve{\sigma}^2_{m,n}$ correspondant aux M symboles reçus sur les M sous-porteuses simultanément.

Les étapes E221 à E223 sont exécutées pour chacun des N intervalles de temps. A l'issue de l'étape E22, le module de filtrage MF a ainsi sélectionné N ensembles distincts de M symboles, effectué N filtrages temporels et filtré les M puissances instantanées du bruit $\sigma_{m,n}^2$ pour chacun des N intervalles de temps.

Dans une variante, seulement l'une des étapes E21 et E22 est exécutée.

Dans une autre variante, l'étape E22 est exécutée avant l'étape E21. En effet, la fréquence et le temps sont des espaces duaux, et l'opération de filtrage est linéaire. Ainsi les deux opérations de filtrage fréquentiel et temporel sont commutatives.

Lorsque les deux filtres sont utilisés successivement par le module de filtrage MF, le deuxième filtre utilisé est appliqué aux variances du bruit $\breve{\sigma}_{m,n}^2$ déjà filtrées par le premier filtre utilisé. Par souci de simplification des notations, les variances du bruit filtrées après utilisation d'un ou de deux filtres sont indifféremment notées $\breve{\sigma}_{m,n}^2$.

Comme expliqué précédemment, la puissance instantanée du bruit selon la relation (2) dépend de l'erreur de traitement $e_{m,n}$ qui est une différence entre le signal bruité reçu initialement et le signal reconstruit sans bruit déduit du signal décodé. Par conséquent, lors des étapes de filtrage E21 et E22, les spectres fréquentiel FF et temporel FT de la puissance instantanée du bruit contiennent peu d'information sur le signal utile puisque ce dernier a été estimé et soustrait au signal reçu. Chaque spectre contient des informations sur des erreurs d'estimation de canal et de décodage et sur du bruit blanc gaussien additif qui sont étalées sur toute la fenêtre d'observation du spectre, et des informations sur le signal d'interférence et sur les variations de ce dernier dans le canal de propagation associé au signal d'interférence.

Les erreurs d'estimation de canal et de décodage sont par nature aléatoires et sont réparties sur toute la trame du signal utile puisque les symboles du signal utile ont été entrelacés et multiplexés en temps et en fréquence avant l'émission du signal utile. Selon les propriétés de la transformation de Fourier rapide FFT, ces erreurs ponctuelles correspondent à des fréquences réparties dans l'ensemble du spectre fréquentiel et à des retards répartis dans l'ensemble du spectre temporel, et sont donc au moins partiellement filtrées. De même, le bruit blanc gaussien additif est inévitable à la réception du signal et une partie du bruit blanc peut être filtrée.

Par ailleurs, le signal d'interférence est considéré de même nature que le signal utile. Dans l'expression de la puissance instantanée du bruit, l'élévation de la norme au carré a pour propriété de faire disparaître, ou au moins d'atténuer, la modulation du signal d'interférence. Lorsque la modulation utilisée est une modulation QAM4, la modulation du signal interféreur disparaît. La composante relative au signal d'interférence dans la puissance instantanée du bruit est donc essentiellement affectée des variations du canal subies par le signal d'interférence au cours de la propagation sur le canal.

Le signal d'interférence est en outre supposé subir les mêmes contraintes physiques que le signal utile reçu. Les canaux de propagation associés respectivement au signal utile et au signal d'interférence ont alors des propriétés similaires. Comme le signal utile, le signal d'interférence respecte notamment des contraintes physiques telles que la fréquence de Doppler maximale $F_{max}$ et le retard maximum $\tau_{max}$. Les coefficients de transfert $\beta_{m,n}$ du canal de propagation associé au signal d'interférence et les coefficients de transfert $\alpha_{m,n}$ du canal de propagation associé au signal utile présentent ainsi des variations similaires.

Les raies et les échantillons relatifs aux coefficients de transfert $\beta_{m,n}$, et donc aux variations du canal de propagation associé au signal d'interférence, sont compris entre les limites des filtres FF et FT.

Les filtrages effectués aux étapes E21 et E22 ont pour résultat d'éliminer une grande partie du bruit blanc gaussien additif et des erreurs d'estimation de canal et de décodage.

A l'étape E3, le module de filtrage MF fournit les variances du bruit filtrées $\breve{\sigma}_{m,n}^2$ au correcteur de vraisemblance COR. Ce dernier pondère la vraisemblance L $(b_{m,n,k})$ déterminée par le démodulateur DEM selon la relation (1) en une vraisemblance pondérée L'$(b_{m,n,k})$ par exemple selon la relation suivante :

$$L'(b_{m,n,k}) = \min_{z/b_k=1}\left(\frac{\left\|r_{m,n} - \hat{\alpha}_{m,n}z\right\|^2}{2\breve{\sigma}_{m,n}^2}\right) - \min_{z/b_k=0}\left(\frac{\left\|r_{m,n} - \hat{\alpha}_{m,n}z\right\|^2}{2\breve{\sigma}_{m,n}^2}\right).$$

La pondération $2\breve{\sigma}^2_{m,n}$ est la même pour les vraisemblances de tous les K bits d'un même symbole du signal reçu et est différente a priori d'un symbole à l'autre du signal reçu.

La vraisemblance des bits d'un symbole est donc corrigée en fonction de la variance du bruit filtrée. La fiabilité de la vraisemblance est augmentée lorsque la variance du bruit filtrée associée au symbole est faible, et inversement est diminuée, lorsque la variance du bruit filtrée associée au symbole est élevée.

A l'étape E4, le correcteur de vraisemblance COR fournit les vraisemblances pondérées L'($b_{m,n,k}$) au désentrelaceur DES qui effectue un désentrelacement des vraisemblances pondérées. Puis le désentrelaceur DES fournit les vraisemblances pondérées désentrelacés au décodeur DEC qui décode les bits correspondant à ces dernières en fonction des vraisemblances pondérées L'($b_{m,n,k}$). Les bits dont la vraisemblance est élevée sont décidés de manière plus fiable, et les bits dont la vraisemblance est faible peuvent être éventuellement corrigés.

En variante, les étapes E1 à E4 du procédé sont réitérées. Après le décodage des symboles, le récepteur produit à nouveau un signal estimé qui est formé en fonction des bits issus du décodage et estime à nouveau une puissance instantanée du bruit $\sigma^2_{m,n}$. Cette dernière est filtrée afin de pondérer les vraisemblances des symboles du signal reçu et de décoder ces symboles en fonction des vraisemblances pondérées. Le nombre d'itération des étapes E1 à E4 est limité par exemple lorsque l'estimation de la variance du bruit filtrée converge à une tolérance près.

La méthode décrite ci-dessus peut être généralisée au cas où les signaux sont reçus sur plusieurs antennes du récepteur. Dans ce cas une variance du bruit filtrée est calculée pour chacune des antennes à partir des estimées des puissances instantanées de bruit calculées pour chacune des antennes.

L'invention décrite ici concerne un procédé et un récepteur pour décoder des symboles d'un signal reçu à travers un canal de propagation, les symboles étant répartis suivant des dimensions fréquentielle et temporelle. Selon une implémentation, les étapes du procédé de l'invention sont déterminées par les instructions d'un programme d'ordinateur incorporé dans le récepteur. Le programme comporte des instructions de programme qui, lorsque ledit programme est exécuté dans le récepteur dont le fonctionnement est alors commandé par l'exécution du programme, réalisent les étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

**Revendications**

1. Procédé pour l'utilisation dans un récepteur de radiocommunication (RE) pour décoder des symboles d'un signal reçu ($r_{m,n}$) à travers un canal de propagation, les symboles étant répartis suivant des dimensions fréquentielle et temporelle, ledit procédé comprenant une détermination (E1) de vraisemblances des symboles du signal reçu, un décodage du signal reçu en un signal décodé en fonction des vraisemblances des symboles, et une estimation d'une puissance instantanée du bruit ($\sigma^2_{m,n}$) du signal reçu en fonction d'une différence entre le signal reçu et un signal reconstruit sans bruit déduit du signal décodé, **caractérisé en ce qu'**il comprend les étapes itératives suivantes :

   une détermination (E211; E221) d'une distribution bornée de la puissance instantanée du bruit en fonction de l'une des dimensions fréquentielle et temporelle,
   un filtrage (E212; E222) de la distribution bornée de la puissance instantanée du bruit en une variance du bruit filtrée (

$$\breve{\sigma}^2_{m,n}$$

) en fonction d'un paramètre du canal de propagation exprimé dans ladite une dimension, et une pondération (E3) des vraisemblances des symboles du signal reçu à décoder en fonction de la variance du bruit filtrée.

2. Procédé conforme à la revendication 1, selon lequel ladite une dimension est la fréquence, et le paramètre du canal de propagation est une fréquence maximale ($F_{max}$) dépendant d'une vitesse maximale de déplacement relatif entre un émetteur et le récepteur.

3. Procédé conforme à la revendication 1, selon lequel ladite une dimension est le temps, et le paramètre du canal de propagation est un retard maximum ($\tau_{max}$) parmi différents retards de trajet possibles du signal reçu.

4. Procédé conforme à l'une quelconque des revendications 1 à 3, selon lequel des première et deuxième distributions bornées de la puissance instantanée du bruit sont déterminées (E211, E221) respectivement en fonction des dimensions fréquentielle et temporelle, et les première et deuxième distributions sont filtrées (E212, E222) en une variance du bruit filtrée (

$$\breve{\sigma}^2_{m,n}$$

) en fonction de paramètres du canal de propagation exprimés respectivement dans les dimensions fréquentielle et temporelle.

5. Procédé conforme à la revendication 4, selon lequel les paramètres du canal de propagation sont une fréquence maximale ($F_{max}$) dépendant d'une vitesse maximale de déplacement relatif entre un émetteur et le récepteur et un retard maximum ($\tau_{max}$) parmi différents retards de trajet possibles du signal reçu.

6. Récepteur de radiocommunication (RE) pour décoder des symboles d'un signal reçu ($r_{m,n}$) à travers un canal de propagation, les symboles étant répartis suivant des dimensions fréquentielle et temporelle, ledit récepteur comprenant un moyen (DEM) pour déterminer des vraisemblances des symboles du signal reçu, un moyen (DEC) pour décoder le signal reçu en un signal décodé en fonction des vraisemblances des symboles, et un moyen (EB) pour estimer une puissance instantanée du bruit ( $\sigma^2_{m,n}$ ) du signal reçu en fonction d'une différence entre le signal reçu et un signal reconstruit sans bruit déduit du signal décodé, **caractérisé en ce qu'**il comprend :

   - un moyen (MF) pour déterminer une distribution bornée de la puissance instantanée du bruit en fonction de l'une des dimensions fréquentielle et temporelle,
   - un moyen (MF) pour filtrer la distribution bornée de la puissance instantanée du bruit en une variance du bruit filtrée (

$$\breve{\sigma}^2_{m,n}$$

   ) en fonction d'un paramètre du canal de propagation exprimé dans ladite une dimension, et
   - un moyen (COR) pour pondérer les vraisemblances des symboles du signal reçu à décoder en fonction de la variance du bruit filtrée.

7. Programme d'ordinateur apte à être mis en oeuvre dans un récepteur (RE) pour décoder des symboles d'un signal reçu ($r_{m,n}$) à travers un canal de propagation, les symboles étant répartis suivant des dimensions fréquentielle et temporelle, ledit programme comprenant des instructions qui, lorsque le programme est exécuté dans ledit récepteur (RE), réalisent une détermination (E1) de vraisemblances des symboles du signal reçu, un décodage du signal reçu en un signal décodé en fonction des vraisemblances des symboles, et une estimation d'une puissance instantanée du bruit ( $\sigma^2_{m,n}$ ) du signal reçu en fonction d'une différence entre le signal reçu et un signal reconstruit sans bruit déduit du signal décodé, ledit programme étant **caractérisé en ce que** les instructions de programme réalisent les étapes itératives suivantes :

une détermination (E211; E221) d'une distribution bornée de la puissance instantanée du bruit en fonction de l'une des dimensions fréquentielle et temporelle,
un filtrage (E212; E222) de la distribution bornée de la puissance instantanée du bruit en une variance du bruit filtrée (

$$\breve{\sigma}^2_{m,n}$$

) en fonction d'un paramètre du canal de propagation exprimé dans ladite une dimension, et
une pondération (E3) des vraisemblances des symboles du signal reçu à décoder en fonction de la variance du bruit filtrée.

**Claims**

1. Method for use in a radio receiver (RE) for decoding symbols of a signal ($r_{m,n}$) received via a propagation channel, the symbols being distributed according to frequency and time dimensions, said method comprising a determination (E1) of probabilities of the symbols of the received signal, a decoding of the received signal into a decoded signal according to the probabilities of the symbols, and an estimation of an instantaneous noise power ($\sigma^2_{m,n}$) of the received signal as a function of a difference between the received signal and a reconstructed noise-free signal derived from the decoded signal, **characterised in that** it comprises the following iterative steps:

    determining (E211; E221) a bounded distribution of the instantaneous noise power as a function of one of the frequency and time dimensions,
    filtering (E212; E222) the bounded distribution of the instantaneous noise power to produce a filtered noise variance (

$$\breve{\sigma}^2_{m,n}$$

) as a function of a parameter of the propagation channel expressed in said one dimension, and
    weighting (E3) the probabilities of the symbols of the received signal to be decoded as a function of the filtered noise variance.

2. Method according to claim 1, wherein said one dimension is frequency, and the parameter of the propagation channel is a maximum frequency ($F_{max}$) depending on a maximum speed of relative movement between a transmitter and the receiver.

3. Method according to claim 1, wherein said one dimension is time, and the parameter of the propagation channel is a maximum delay ($\tau_{max}$) out of different possible path delays of the received signal.

4. Method according to any one of claims 1 to 3, wherein first and second bounded distributions of the instantaneous noise power are determined (E211, E221) as a function of the frequency and time dimensions respectively, and the first and second bounded distributions are filtered (E212, E222) to produce a filtered noise variance (

$$\breve{\sigma}^2_{m,n}$$

) as a function of parameters of the propagation channel expressed in the frequency and time dimensions respectively.

5. Method according to claim 4, wherein the parameters of the propagation channel are a maximum frequency ($F_{max}$) depending on a maximum speed of relative movement between a transmitter and the receiver and a maximum delay ($\tau_{max}$) out of different possible path delays of the received signal.

6. Radio receiver (RE) for decoding symbols of a signal ($r_{m,n}$) received via a propagation channel, the symbols being distributed according to frequency and time dimensions, said receiver comprising a means (DEM) for determining probabilities of the symbols of the received signal, a means (DEC) for decoding the received signal into a decoded signal according to the probabilities of the symbols, and a means (EB) for estimating an instantaneous noise power ( $\sigma_{m,n}^2$ ) of the received signal as a function of a difference between the received signal and a reconstructed noise-free signal derived from the decoded signal, **characterised in that** it comprises:

- a means (MF) for determining a bounded distribution of the instantaneous noise power as a function of one of the frequency and time dimensions,
- a means (MF) for filtering the bounded distribution of the instantaneous noise power to produce a filtered noise variance (

$$\breve{\sigma}_{m,n}^2$$

) as a function of a parameter of the propagation channel expressed in said one dimension, and
- a means (COR) for weighting the probabilities of the symbols of the received signal to be decoded as a function of the filtered noise variance.

7. Computer program suitable for being implemented in a receiver (RE) for decoding symbols of a signal ($r_{m,n}$) received via a propagation channel, the symbols being distributed according to frequency and time dimensions, said program comprising instructions which, when the program is executed in said receiver (RE), perform a determination (E1) of probabilities of the symbols of the received signal, decoding of the received signal into a decoded signal as a function of the probabilities of the symbols, and an estimation of an instantaneous noise power ( $\sigma_{m,n}^2$ ) of the received signal as a function of a difference between the received signal and a reconstructed noise-free signal derived from the decoded signal, said program being **characterised in that** the program instructions perform the following iterative steps:

determining (E211; E221) a bounded distribution of the instantaneous noise power as a function of one of the frequency and time dimensions,
filtering (E212; E222) the bounded distribution of the instantaneous noise power to produce a filtered noise variance (

$$\breve{\sigma}_{m,n}^2$$

) as a function of a parameter of the propagation channel expressed in said one dimension, and
weighting (E3) the probabilities of the symbols of the received signal to be decoded as a function of the filtered noise variance.

**Patentansprüche**

1. Verfahren zur Verwendung in einem Funkempfänger (RE) zum Dekodieren der Symbole eines über einen Ausbreitungskanal empfangenen Signals ($r_{m,n}$), wobei die Symbole nach Frequenz- und Zeitdimensionen aufgeteilt sind, wobei das Verfahren eine Bestimmung (E1) von Wahrscheinlichkeiten der Symbole des empfangenen Signals, eine Dekodierung des empfangenen Signals in ein dekodiertes Signal in Abhängigkeit von den Wahrscheinlichkeiten der Symbole und eine Schätzung einer Momentanleistung des Rauschens ($\sigma^2_{m,n}$) des empfangenden Signals in Abhängigkeit von einer Differenz zwischen dem empfangenen Signal und einem ohne Rauschen wiederhergestellten Signal, das von dem dekodierten Signal abgeleitet wird, umfasst, **dadurch gekennzeichnet, dass** es die folgenden iterativen Schritte umfasst:

Bestimmen (E211; E221) einer begrenzten Verteilung der Momentanleistung des Rauschens in Abhängigkeit von einer der Frequenz- und Zeitdimensionen,
Filtern (E212; E222) der begrenzten Verteilung der Momentanleistung des Rauschens zu einer Varianz des gefilterten Rauschens (

$$\breve{\sigma}^{2}_{m,n}$$

) in Abhängigkeit von einem Parameter des Ausbreitungskanals, ausgedrückt in der einen Dimension, und Gewichten (E3) der Wahrscheinlichkeiten der Symbole des empfangenen Signals, das in Abhängigkeit von der Varianz des gefilterten Rauschens zu dekodieren ist.

2. Verfahren nach Anspruch 1, wobei die Dimension die Frequenz ist, und der Parameter des Ausbreitungskanals eine Höchstfrequenz ($F_{max}$) ist, die von einer maximalen relativen Bewegungsgeschwindigkeit zwischen einem Sender und dem Empfänger abhängig ist.

3. Verfahren nach Anspruch 1, wobei die eine Dimension die Zeit ist und der Parameter des Ausbreitungskanals eine Höchstverzögerung ($\tau_{max}$) aus verschiedenen möglichen Streckenverzögerungen des empfangenen Signals ist.

4. Verfahren nach einem der Ansprüche 1 bis 3, wobei die ersten und zweiten begrenzten Verteilungen der Momentanleistung des Rauschens jeweils in Abhängigkeit von den Frequenz- und Zeitdimensionen bestimmt werden (E211, E221), und die ersten und zweiten Verteilungen zu einer Varianz des gefilterten Rauschens (

$$\breve{\sigma}^{2}_{m,n}$$

) in Abhängigkeit von Parametern des Ausbreitungskanals, die jeweils in den Frequenz- und Zeitdimensionen ausgedrückt werden, gefiltert werden (E212, E222).

5. Verfahren nach Anspruch 4, wobei die Parameter des Ausbreitungskanals eine maximale Frequenz ($F_{max}$), die von einer maximalen relativen Bewegungsgeschwindigkeit zwischen einem Sender und dem Empfänger abhängig ist, und eine maximale Verzögerung ($\tau_{max}$) zwischen verschiedenen möglichen Streckenverzögerungen des empfangenen Signals sind.

6. Funkempfänger (RE) zum Dekodieren der Symbole eines über einen Ausbreitungskanal empfangenen Signals ($r_{m,n}$), wobei die Symbole nach den Frequenz- und Zeitdimensionen aufgeteilt sind, wobei der Empfänger ein Mittel (DEM), um die Wahrscheinlichkeiten der Symbole des empfangenen Signals zu bestimmen, ein Mittel (DEC) zum Dekodieren des empfangenen Signals in ein Signal, das in Abhängigkeit von den Wahrscheinlichkeiten der Symbole dekodiert wird, und ein Mittel (EB) zum Schätzen einer Momentanleistung des Rauschens ($\sigma^{2}_{m,n}$) des empfangenen Signals in Abhängigkeit von einer Differenz zwischen dem empfangenen Signal und einem ohne Rauschen wiederhergestellten Signal, das von dem dekodierten Signal abgeleitet wird, umfasst, **dadurch gekennzeichnet, dass** er Folgendes umfasst:

    - ein Mittel (MF) zum Bestimmen einer begrenzten Verteilung der Momentanleistung des Rauschens in Abhängigkeit von einer der Frequenz- und Zeitdimensionen,
    - ein Mittel (MF) zum Filtern der begrenzten Verteilung der Momentanleistung des Rauschens zu einer Varianz des gefilterten Rauschens (

$$\breve{\sigma}^{2}_{m,n}$$

) in Abhängigkeit von einem Parameter des Ausbreitungskanals, ausgedrückt in der einen Dimension, und
    - ein Mittel (COR) zum Gewichten der Wahrscheinlichkeiten der Symbole des empfangenen Signals, das in Abhängigkeit von der Varianz des gefilterten Rauschens zu dekodieren ist.

7. Computerprogramm, das dazu geeignet ist, in einem Empfänger (RE) eingesetzt zu werden, um die Symbole eines über einen Ausbreitungskanal empfangenen Signals ($r_{m,n}$) zu dekodieren, wobei die Symbole nach den Frequenz- und Zeitdimensionen aufgeteilt sind, wobei das Programm Befehle umfasst, die, wenn das Programm auf dem Empfänger (RE) ausgeführt wird, eine Bestimmung (E1) von Wahrscheinlichkeiten der Symbole des empfangenen Signals, eine Dekodierung des empfangenen Signals in ein Signal, das in Abhängigkeit von den Wahrscheinlichkeiten der Symbole dekodiert wird, und eine Schätzung einer Momentanleistung des Rauschens ($\sigma^{2}_{m,n}$) des emp-

fangenen Signals in Abhängigkeit von einer Differenz zwischen dem empfangenen Signal und einem ohne Rauschen wiederhergestellten Signal, das von dem dekodierten Signal abgeleitet wird, ausführen, wobei das Programm **dadurch gekennzeichnet ist, dass** die Programmbefehle die folgenden iterativen Schritte ausführen:

Bestimmen (E211; E221) einer begrenzten Verteilung der Momentanleistung des Rauschens in Abhängigkeit von einer der Frequenz- und Zeitdimensionen,
Filtern (E212; E222) der begrenzten Verteilung der Momentanleistung des Rauschens zu einer Varianz des gefilterten Rauschens (

$$\breve{\sigma}^2_{m,n}$$

) in Abhängigkeit von einem Parameter des Ausbreitungskanals, ausgedrückt in der einen Dimension, und Gewichten (E3) der Wahrscheinlichkeiten der Symbole des empfangenen Signals, das in Abhängigkeit von der Varianz des gefilterten Rauschens zu dekodieren ist.

## FIG. 1

RE

sr

CTF1 — FFT $r_{m,n}$

EC — Estimateur de canal, $y_{m,n}$

Démodulateur $L(b_{m,n,k})$ — DEM

DEC — Décodeur

$b_{m,n,k}$

Désentrelaceur — DES

SE

COD — Codeur

ENT — Entrelaceur

MOD — Modulateur $a_{m,n}$

CFT — IFFT

SIMULATEUR D'EMISSION

SR

Correcteur de vraisemblance $\bar{\sigma}^2_{m,n}$ — COR

FILTRAGE FT, FF — MF

$\hat{\alpha}_{m,n}$ — Estimateur de bruit $\sigma^2_{m,n}$ — EB

FFT — CTF2

SIMULATEUR DE RECEPTION

17

# FIG. 2

E1

RE, EB : $r_{m,n}$, $L(b_{m,n,k})$, $\sigma^2_{m,n}$

E211

MF : FFT($\sigma^2_{m,n}$) → N raies fréquentielles

E21

E212

MF : FF($F_{max}$)

E213

MF : IFFT(N raies fréquentielles) → $\breve{\sigma}^2_{m,n}$

E2

E221

MF : IFFT($\sigma^2_{m,n}$) → N échantillons temporels

E22

E222

MF : FT($\tau_{max}$)

E223

MF : FFT(N échantillons temporels) → $\breve{\sigma}^2_{m,n}$

E3

COR : $L(b_{m,n,k})$ / ($\breve{\sigma}^2_{m,n}$) → $L'(b_{m,n,k})$

E4

DEC : décodage selon $L'(b_{m,n,k})$

**EP 1 988 656 B1**

## RÉFÉRENCES CITÉES DANS LA DESCRIPTION

**Documents brevets cités dans la description**

- EP 1054541 A